# EUROPEAN PATENT APPLICATION

(11) **EP 4 592 214 A1**
(43) Date of publication of application: **30.07.2025**
(21) Application number: 23871575.9
(22) Date of filing: 22.08.2023
(51) Int. Cl.: B65G 1/04

(54) **TRANSPORT VEHICLE**

(30) Priority: 28.09.2022 JP 2022155507
(71) Applicant: Daifuku Co., Ltd., Osaka-shi, Osaka 555-0012 (JP)
(72) Inventor: IWATA, Masashige, Gamo-gun, Shiga 529-1692 (JP); KIMURA, Kazunari, Gamo-gun, Shiga 529-1692 (JP); HORIE, Satoshi, Gamo-gun, Shiga 529-1692 (JP)
(74) Representative: Grosse Schumacher Knauer von Hirschhausen
(86) International application number: PCT/JP2023/030071
(87) International publication number: WO 2024/070334

(57) **Abstract**

A transferrer (H1, H2) includes a holder that holds an article to transfer the article between the holder and shelves (80) by moving the article in a transfer direction intersecting with, when viewed vertically, a vehicle front-rear direction. A controller performs, in response to a lift (40B) being in an area above a predetermined reference height (h) within a lift range of the lift (40B), acceleration limit control to set an upper limit for acceleration of the article moved in the transfer direction by the transferrer (H1, H2) to be lower than a case of the lift (40B) being in an area below the reference height (h).

## Description

### FIELD

The present invention relates to a transport vehicle that transports articles by traveling along the front side of a storage rack including multiple shelves arranged vertically for storing articles.

### BACKGROUND

Such transport vehicles are known to include transfer devices that transfer articles to and from storage racks.

For example, a transfer device (2) described in Japanese Patent No. 6337706 (Patent Literature 1) includes a load mount (26) on which loads (10) are placed and a slide arm (28) with a top portion (42) that reciprocates in a direction in which the loads (10) are transferred. The transfer device (2) performs an unloading operation to transfer loads (10) from the load mount (26) to racks (12a, 12b) and a pickup operation to transfer loads (10) from the racks (12a, 12b) to the load mount (26) using reciprocation of the top portion (42) of the slide arm (28). Reference signs in parentheses used above are the reference signs in Patent Literature 1.

### CITATION LIST

### PATENT LITERATURE

Patent Literature 1: Japanese Patent No. 6337706

### BRIEF SUMMARY

### TECHNICAL PROBLEM

In a transport vehicle with such a transfer device described above, operations to transfer articles may generate an inertial force in the direction of transfer, vibrating or tilting the transport vehicle. Large vibrations or tilting of the transport vehicle may change the positions of articles, shelves, and the transfer device relative to each other, affecting the transfer operations.

Under such circumstances, one or more aspects of the present invention are directed to a transport vehicle that is less likely to vibrate or tilt in response to operations to transfer articles.

### SOLUTION TO PROBLEM

A transport vehicle transports articles by traveling along a front side of a storage rack including a plurality of shelves arranged vertically for storing the articles. The transport vehicle includes a traveler that travels along a travel path, a transfer device that transfers an article, and a controller that controls the transfer device. The transfer device includes a mast fixed to the traveler and extending vertically, a lift that ascends and descends along the mast, and a transferrer supported by the lift. The transferrer includes a holder that holds the article. The transferrer transfers the article between the holder and the shelves by moving the article in a transfer direction intersecting with, when viewed vertically, a vehicle front-rear direction in which the traveler travels. The controller performs, in response to the lift being in an area above a predetermined reference height within a lift range of the lift, acceleration limit control to set an upper limit for acceleration of the article moved in the transfer direction by the transferrer to be lower than a case of the lift being in an area below the reference height.

Large vibrations or tilting of the transport vehicle caused by a transfer operation may change the positions of the article, the shelf, and the transferrer relative to each other, lowering the accuracy of the transfer operation. To avoid such lowered accuracy, the transfer operation is suspended until the vibrations or the tilting attenuates.

However, the transport vehicle with the above structure is less likely to vibrate or tilt in response to operations to transfer articles. Thus, the structure can avoid such lowered accuracy of transfer operations and reduce the frequency of suspension of transfer operations, thus increasing the efficiency of transfer operations.

As described above, the transport vehicle with the structure is less likely to vibrate or tilt in response to operations to transfer articles.

Further features and advantageous effects of the technique according to the disclosure will be apparent from exemplary and nonlimiting embodiments described below with reference to the drawings.

### BRIEF DESCRIPTION OF DRAWINGS

FIG. 1 is a plan view of a transport facility including transport vehicles.
FIG. 2 is a front view of a container rack.
FIG. 3 is a view of a transport vehicle when viewed in a vehicle width direction.
FIG. 4 is a diagram of a traveler showing its structure.
FIG. 5 is a plan view of a transfer device in a first orientation and a second orientation.
FIG. 6 is a diagram describing an operation to pick up a container from a shelf.
FIG. 7 is a diagram describing an operation to unload a container to a shelf.
FIG. 8 is a diagram describing a reference height.
FIG. 9 is a graph showing an acceleration limit process.
FIG. 10 is a diagram describing a reference height in another embodiment.
FIG. 11 is a graph describing an acceleration limit process in another embodiment.
FIG. 12 is a graph describing an acceleration limit process in another embodiment.

### DETAILED DESCRIPTION

A transport vehicle transports articles by traveling along the front side of a storage rack including multiple shelves arranged vertically for storing articles. The transport vehicle according to one or more embodiments described in the example below is included in a transport facility for transporting containers. In other words, in the present embodiment, a container corresponds to an article, and a container rack for storing containers corresponds to a storage rack.

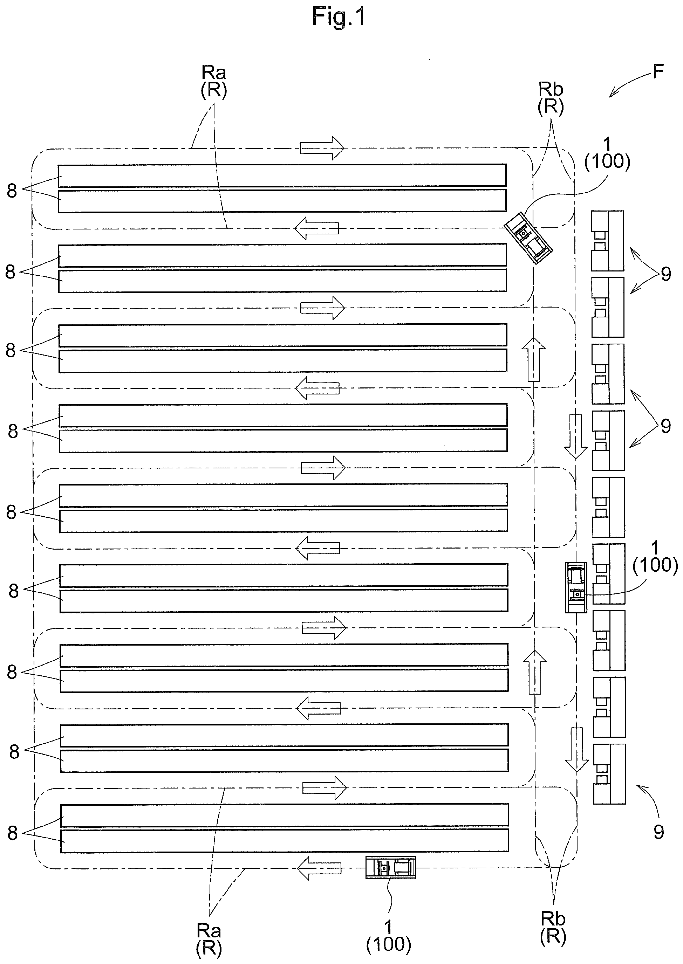

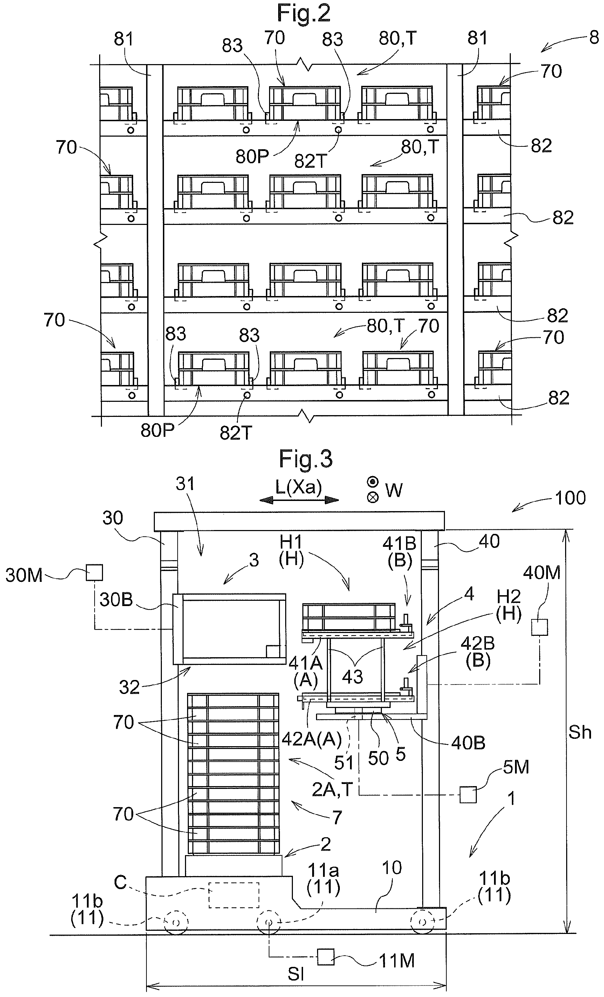

As shown in FIG. 1, a transport facility F includes container racks 8 that store containers 70 (refer to FIG. 3) and shipping-receiving sections 9 for shipping and receiving containers 70. A transport vehicle 100 transports containers 70 received at the shipping-receiving sections 9 to the container racks 8 or transports containers 70 stored in the container racks 8 to the shipping-receiving sections 9 for shipping.

In the present embodiment, multiple container racks 8 are arranged in parallel and at predetermined intervals. The multiple container racks 8 each have an opening at least on its front side. Containers 70 are loaded and unloaded through the open front. A travel path R for a traveler 1 (transport vehicle 100) is partially installed between pairs of container racks 8 adjacently disposed with their front sides facing each other. Of the multiple container racks 8 in the transport facility F, the outermost container racks 8 each have the front side facing outward. The travel path R is also partially installed in areas along the front sides of the outer most container racks 8. The transport facility F includes the multiple shipping-receiving sections 9. The travel path R is also installed partially in areas passing by the multiple shipping-receiving sections 9.

The travel path R includes shelf-area paths Ra that extend along the front sides of the container racks 8 in a direction in which the container racks 8 extend and an extra-shelf path Rb outside the area where the container racks 8 are arranged. The shelf-area paths Ra are each installed for the corresponding one of the container racks 8. In the present embodiment, the shelf-area paths Ra correspond to part of the travel path R installed between pairs of container racks 8 adjacently disposed with their front sides facing each other and to part of the travel path R along the front sides of the container racks 8 each having the front side facing outward. The extra-shelf path Rb connects the multiple shelf-area paths Ra. The extra shelf-path Rb also passes by each of the multiple shipping-receiving sections 9. In the present embodiment, the extra-shelf path Rb corresponds to the portion of the travel path R other than the shelf-area paths Ra.

### Container Rack

As shown in FIG. 2, each container rack 8 includes multiple shelves 80 arranged vertically for storing containers 70. In the present embodiment, the container rack 8 includes multiple beams 82 extending horizontally along the front side of the container rack 8, and multiple posts 81 extending vertically and connected to the beams 82.

Mounts 83 for receiving containers 70 are connected to each beam 82. In this example, containers 70 are received by pairs of mounts 83 and stored on the shelves 80. Multiple pairs of mounts 83 are arranged on each shelve 80 to store multiple containers 70 on one shelf 80. In this example, the opening of the container rack 8 corresponds to an area between a pair of posts 81 adjacent to each other in the width direction (lateral direction) and between a pair of beams 82 adjacent to each other in the vertical direction in the front view in FIG. 3.

In the present embodiment, targets 82T are at reference positions 80P for storing containers 70 on the shelves 80. Each target 82T is used as a target in storing a container 70 at the corresponding reference position 80P. In this example, the targets 82T are on the beams 82. One target 82T is provided for each pair of mounts 83. In the illustrated example, the targets 82T are holes on the beams 82.

### Container

The transport vehicle 100 transports containers 70. Although not shown in detail, each container 70 is in the form of an open-top box. In this example, the container 70 is rectangular when viewed vertically. The container 70 can accommodate a predetermined object. The object to be accommodated may be, for example, one of various products such as a food product and household goods, or one of parts and workpieces used in, for example, factory production lines.

In the present embodiment, containers 70 are stackable on one another with objects accommodated inside. In other words, the containers 70 are stackable in the vertical direction (refer to FIG. 3). In this example, the bottom of a container 70 may be fitted with the opening of another container 70 from above, thus achieving a vertical stack of two containers 70.

### Transport Vehicle

As shown in FIG. 3, the transport vehicle 100 includes the traveler 1 that travels along the predetermined travel path R, a transfer device 4 that transfers containers 70, and a controller C that controls the transfer device 4. In the present embodiment, the transport vehicle 100 includes a container group support 2 that supports a stack of multiple containers 70 as a container group 7 in a predetermined stacking space 2A, and a lifter 3 that lifts the containers 70 in the container group 7 supported on the container group support 2. The controller C controls the traveler 1, the container group support 2, and the lifter 3, in addition to the transfer device 4.

The container group support 2, the lifter 3, and the transfer device 4 are mounted on the traveler 1. The direction in which the traveler 1 travels is referred to as a vehicle front-rear direction L. The container group support 2 and the transfer device 4 are arranged side by side on the traveler 1 in the vehicle front-rear direction L. A direction perpendicular to the vehicle front-rear direction L when viewed vertically is hereafter referred to as a vehicle width direction W. In this example, the vehicle front-rear direction L and the vehicle width direction W are horizontal directions perpendicular to each other.

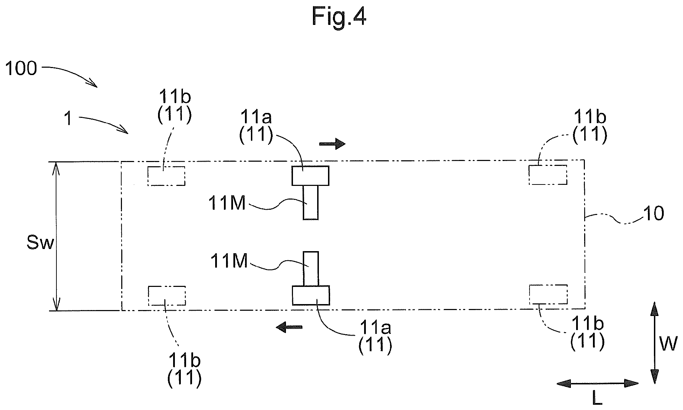

As shown in FIGs. 3 and 4, the transport vehicle 100 has a width Sw less than or equal to half a length Sl and a height Sh greater than or equal to twice the width Sw, where Sl is the dimension of the traveler 1 in the vehicle front-rear direction L, Sw is the dimension of the traveler 1 in the vehicle width direction W, and Sh is the height from the lower end of the traveler 1 to the upper ends of a pair of transfer masts 40 (described later). In the present embodiment, the height Sh corresponds to a vertical dimension from the lower end of the traveler to the upper end of the mast.

The controller C controls each functional component of the transport vehicle 100. In this example, the controller C controls the traveler 1, the container group support 2, the lifter 3, the transfer device 4, and a rotator 5 (described later). The controller C controls each functional component to perform operations for transporting and transferring containers 70. The controller C includes, for example, a processor such as a microcomputer, and peripheral circuitry such as a memory. The functions are implemented by the above hardware and a program executed on a processor such as a computer cooperating with each other.

### Traveler

The traveler 1 travels along the travel path R (refer to FIG. 1). In the present embodiment, the traveler 1 travels along the shelf-area paths Ra and the extra-shelf path Rb. When traveling on the shelf-area paths Ra, the traveler 1 travels along the container racks 8, or more specifically, along the front sides of the container racks 8. In the present embodiment, the traveler 1 travels on a floor surface.

The traveler 1 includes a traveler body 10, multiple travel wheels 11 connected to the traveler body 10, and travel wheel drivers 11M that drive at least one of the travel wheels 11. The travel wheel drivers 11M include motors (not shown). The travel wheel drivers 11M drive the travel wheels 11 to propel the traveler 1.

As shown in FIG. 4, in the present embodiment, a pair of drive wheels 11a are disposed in the middle of the traveler body 10 in the vehicle front-rear direction L, spaced from each other in the vehicle width direction W. Each of the pair of drive wheels 11a is driven by a different travel wheel driver 11M. Follower wheels 11b are disposed on both sides of each of the pair of drive wheels 11a in the vehicle front-rear direction L.

In the present embodiment, the length Sl is the dimension of the traveler body 10 in the vehicle front-rear direction L (refer to FIG. 3), and the width Sw is the dimension of the traveler body 10 in the vehicle width direction W (refer to FIG. 4). The width of the traveler 1 (traveler body 10) is determined based on the longitudinal dimension of containers 70 to allow the containers 70 rotated by the transfer device 4 to be within the width of the traveler 1 (traveler body 10) as described below.

The traveler 1 with the above structure is rotatable about a vertical axis at a position. More specifically, the pair of drive wheels 11a are rotated in directions opposite to each other (directions indicated by arrows in FIG. 4), causing the traveler 1 to rotate about the vertical axis at a position. This allows the traveler 1 to change the direction of travel within a relatively small area.

### Container Group Support

As shown in FIG. 3, the container group support 2 is mounted on the traveler 1. The container group support 2 can support a stack of multiple containers 70 as a container group 7. The stacking space 2A for the container group 7 is defined above the container group support 2. The stacking space 2A is a three-dimensional imaginary space above the container group support 2. In this example, the container group support 2 is a conveyor that can move the container group 7 placed on the conveyor. In this example, the container group support 2 can move the container group 7 in the vehicle width direction W. The conveyor that serves as the container group support 2 may be, for example, a roller conveyor, a chain conveyor, a belt conveyor, or other known conveyors.

Container groups 7 each including a stack of multiple containers 70 are received by the shipping-receiving sections 9 (refer to FIG. 1). With the traveler 1 being adjacent to a shipping-receiving section 9, the container group support 2 receives a container group 7 from the shipping-receiving section 9 or delivers a container group 7 to the shipping-receiving section 9. In other words, the container group support 2 transfers container groups 7 to and from the shipping-receiving sections 9. Although not shown in detail, in this example, the shipping-receiving sections 9 are adjacent to a picking area where objects in the containers 70 such as products are taken out from the containers 70. When a container group 7 is transferred from the container group support 2 to a shipping-receiving section 9, the objects are taken out from the containers 70 in the picking area adjacent to the shipping-receiving section 9. After some or all of the objects in the containers 70 are taken out, the containers 70 are transferred from the shipping-receiving section 9 to the container group support 2 (transport vehicle 100) and transported back to a container rack 8. The shipping-receiving sections 9 may or may not be adjacent to a picking area, and may be adjacent to other facility or work area. For example, the shipping-receiving sections 9 may transport the container groups 7 transferred from the container group support 2 to the outside of the transport facility F.

### Lifter

The lifter 3 is mounted on the traveler 1. The lifter 3 lifts the containers 70 in the container group 7 supported on the container group support 2, or in other words, the containers 70 in the container group 7 placed in the stacking space 2A.

The lifter 3 includes a lifting mast 30 extending upward from the traveler 1, a lift 30B connected to the lifting mast 30, and a lift driver 30M that drives the lift 30B to ascend and descend along the lifting mast 30. Although not shown in detail, the lift driver 30M includes, for example, an endless body such as a belt connected to the lift 30B, a rotator around which the endless body is wound, and a motor that drives the rotator to rotate.

The lifter 3 includes a first lifting assembly 31 and a second lifting assembly 32. The first lifting assembly 31 lifts a container 70 at any height among the containers 70 in the container group 7 stacked in the stacking space 2A relative to another container 70 disposed adjacently below the container 70 to be lifted. The second lifting assembly 32 lifts a container 70 disposed more downward than the container 70 lifted by the first lifting assembly 31 relative to another container 70 disposed adjacently below the container 70 to be lifted by the second lifting assembly. In the present embodiment, the first lifting assembly 31 and the second lifting assembly 32 are vertically spaced apart. This allows a vertical space to be left between the container 70 lifted by the first lifting assembly 31 and the container 70 lifted by the second lifting assembly 32, although not shown. This also allows a vertical space to be left below the container 70 lifted by the second lifting assembly 32.

Although not described in detail, in the present embodiment, any vertical space left between the container 70 lifted by the first lifting assembly 31 and the container 70 lifted by the second lifting assembly 32 can receive another container 70 unloaded. Any vertical space left below the container 70 lifted by the second lifting assembly 32 allows another container 70 below the container 70 lifted by the second lifting assembly 32 to be picked up.

### Transfer Device

As shown in FIG. 3, the transfer device 4 is mounted on the traveler 1. The transfer device 4 transfers a container 70 to and from a transfer destination T. The transfer device 4 performs an unloading operation to transfer a container 70 to the transfer destination T and a pickup operation to transfer a container 70 from the transfer destination T. Pickup herein refers to transferring a container 70 from the transfer destination T to the transfer device 4, and is not limited to any specific transfer operation. In the present embodiment, the transfer destination T is the stacking space 2A or shelves 80 in a container rack 8.

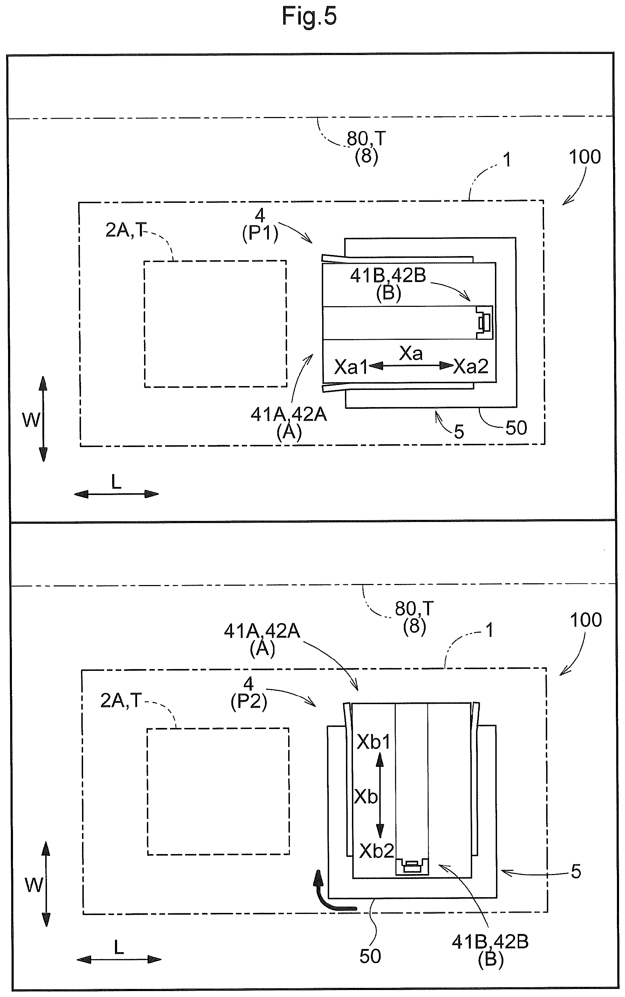

In the present embodiment, the transport vehicle 100 includes the rotator 5 that rotates the transfer device 4 about a vertical axis. As shown in FIG. 5, the rotator 5 rotates the transfer device 4 (more specifically, part of the transfer device 4) about the vertical axis to change the orientation of the transfer device 4 to a first orientation P1 for the transfer destination T being the stacking space 2A and to a second orientation P2 for the transfer destination T being a container rack 8 (shelf 80). In this example, the rotator 5 includes a rotary stand 50 supporting the transfer device 4 (more specifically, part of the transfer device 4), a rotary shaft 51 supporting the rotary stand 50 to allow the rotary stand 50 to rotate relative to a transfer lift 40B, and a rotator driver 5M that drives the rotary shaft 51. Thus, in the present embodiment, the rotator 5 can change the direction of movement of the containers 70 transferred by the transfer device 4 within a horizontal plane.

The direction of movement of a container 70 transferred by the transfer device 4 in the first orientation P1 is referred to as a first transfer direction Xa. The direction of movement of a container 70 transferred by the transfer device 4 in the second orientation P2 is referred to as a second transfer direction Xb. In the first transfer direction Xa, a first side is referred to as an unloading side Xa1 in the first transfer direction, and a second side is referred to as a pickup side Xa2 in the first transfer direction. In the second transfer direction Xb, a first side is referred to as an unloading side Xb1 in the second transfer direction, and a second side is referred to as a pickup side Xb2 in the second transfer direction. A container 70 being unloaded in the first transfer direction Xa moves toward the unloading side Xa1 in the first transfer direction. A container 70 being unloaded in the second transfer direction Xb moves toward the unloading side Xb1 in the second transfer direction. A container 70 being picked up in the first transfer direction Xa moves toward the pickup side Xa2 in the first transfer direction. A container 70 being picked up in the second transfer direction Xb moves toward the pickup side Xb2 in the second transfer direction.

The first transfer direction Xa is a direction parallel to the vehicle front-rear direction L when viewed vertically. In this example, the first transfer direction Xa is parallel to the horizontal direction and the vehicle front-rear direction L. The first transfer direction Xa may intersect with the vehicle front-rear direction L when viewed vertically or may be inclined with respect to the horizontal direction.

The second transfer direction Xb intersects with the vehicle front-rear direction L when viewed vertically. In this example, the second transfer direction Xb is parallel to the horizontal direction and perpendicular to the vehicle front-rear direction L. The second transfer direction Xb may intersect with the vehicle front-rear direction L at an angle other than 90° when viewed vertically or may be inclined with respect to the horizontal direction. In the present embodiment, the second transfer direction Xb corresponds to a transfer direction.

As shown in FIG. 3, the transfer device 4 includes the transfer masts 40 fixed to the traveler 1 and extending in the vertical direction, a transfer lift 40B that ascends and descends along the transfer masts 40, and transferrers H connected to the transfer lift 40B. Each transferrer H includes a holder A that holds a container 70 and a transfer member B that transfers the container 70. The transfer device 4 includes a transfer lift driver 40M that causes the transfer lift 40B to ascend and descend along the transfer masts 40. Although not shown in detail, the transfer lift driver 40M includes, for example, an endless body such as a belt connected to the transfer lift 40B, a rotator around which the endless body is wound, and a motor that drives the rotator to rotate. In the present embodiment, the transfer masts 40 each correspond to a mast, and the transfer lift 40B corresponds to a lift.

In the present embodiment, the transfer device 4 can move the transferrers H (the holders A and the transfer members B) vertically to transfer a container 70 to each shelf 80 (refer to FIG. 2). In this example, the controller C that controls the transfer device 4 performs lift control to cause the transfer lift 40B to ascend and descend for transferring containers 70 to and from the container racks 8. In other words, the transfer lift 40B ascends and descends within a predetermined lift range.

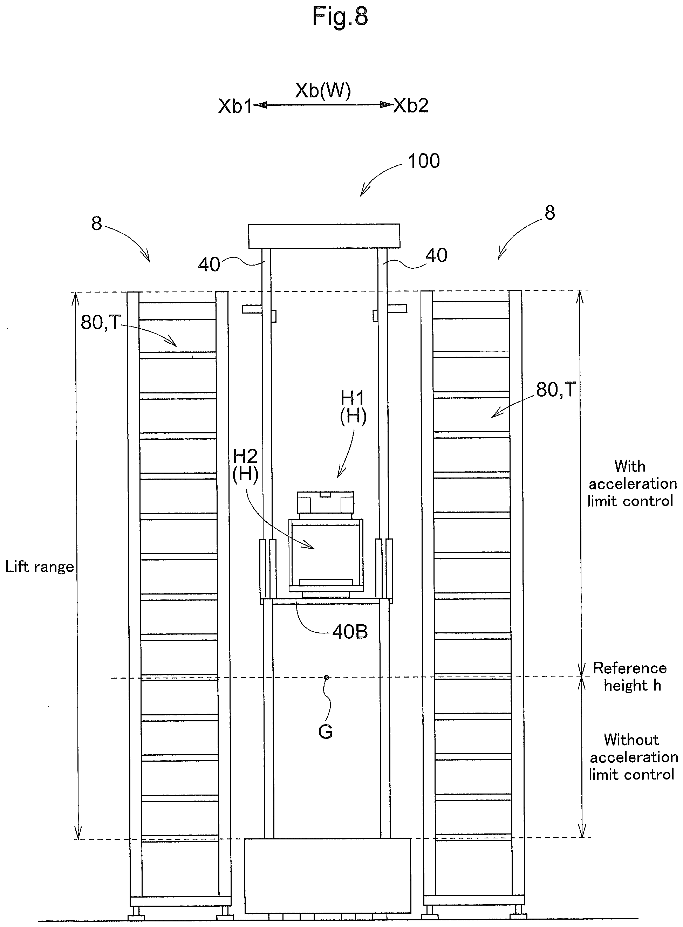

In the present embodiment, the pair of transfer masts 40 are fixed to the traveler 1, spaced apart in the vehicle width direction W (refer also to FIG. 8). The transfer lift 40B is supported by the pair of transfer masts 40 to ascend and descend along the transfer masts 40. In other words, in the present embodiment, the height Sh is the height from the travel surface on which the traveler 1 travels to the upper ends of the transfer masts 40 (refer to FIG. 3). The height to the upper ends of the transfer masts 40 is set based on the height of the shelves 80.

In the present embodiment, as shown in FIGs. 3, 6, and 7, the transfer device 4 includes a first transferrer H1 and a second transferrer H2.

The first transferrer H1 includes a first holder 41A that holds a container 70, a first engagement member 41Bb engageable with the container 70, a first transfer driver 41Mc that moves the first engagement member 41Bb in each of the transfer directions Xa and Xb, and a first holder driver 41MA that moves the first holder 41A in each of the transfer directions Xa and Xb. In the present embodiment, the first engagement member 41Bb is supported by a first support 41Bc together with a first pressing member 41Ba that presses the container 70 toward the unloading side Xa1 or Xb1 in the corresponding transfer direction. The first support 41Bc is supported by the first holder 41A, and is movable relative to the first holder 41A by the first transfer driver 41Mc in each of the transfer directions Xa and Xb. In other words, in the present embodiment, the first engagement member 41Bb moves in each of the transfer directions Xa and Xb integrally with the first pressing member 41Ba as the first support 41Bc moves. In the present embodiment, the first engagement member 41Bb and the first pressing member 41Ba are included in a first transfer member 41B that transfers a container 70 between the first holder 41A and the transfer destination T.

The second transferrer H2 includes a second holder 42A disposed below the first holder 41A to hold a container 70, a second engagement member 42Bb engageable with the container 70, a second transfer driver 42Mc that moves the second engagement member 42Bb in each of the transfer directions Xa and Xb, and a second holder driver 42MA that moves the second holder 42A in each of the transfer directions Xa and Xb. In the present embodiment, the second engagement member 42Bb is supported by a second support 42Bc together with a second pressing member 42Ba that presses the container 70 toward the unloading side Xa1 or Xb1 in the corresponding transfer direction. The second support 42Bc is supported by the second holder 42A, and is movable relative to the second holder 42A by the second transfer driver 42Mc in each of the transfer directions Xa and Xb. In other words, in the present embodiment, the second engagement member 42Bb moves in each of the transfer directions Xa and Xb integrally with the second pressing member 42Ba as the second support 42Bc moves. In the present embodiment, the second engagement member 42Bb and the second pressing member 42Ba are included in a second transfer member 42B that transfers a container 70 between the second holder 42A and the transfer destination T.

In the present embodiment, the first holder 41A and the second holder 42A are vertically connected by holder connectors 43. Thus, the first holder 41A and the second holder 42A move integrally with each other. In this example, the first holder driver 41MA that drives the first holder 41A and the second holder driver 42MA that drives the second holder 42A are driven by the same drive source.

In this example, the controller C that controls the transfer device 4 controls the first transfer driver 41Mc and the second transfer driver 42Mc to perform movement control to move the transfer members 41B and 42B in each of the transfer directions Xa and Xb. The controller C also controls the holder drivers 41MA and 42MA to perform advancement-retraction control to cause the holders 41A and 42A to advance and retract in each of the transfer directions Xa and Xb. In the present embodiment, the first transfer driver 41Mc and the second transfer driver 42Mc each correspond to a mover assembly, and the first holder driver 41MA and the second holder driver 42MA each correspond to an advancement-retraction assembly.

The first transferrer H1 and the second transferrer H2 can transfer containers 70 to each of the shelves 80 and the stacking space 2A. When the transfer destination T is a shelf 80, each of the transferrers H1 and H2 in the second orientation P2 moves a container 70 from the holder 41A or 42A to a shelf 80 to transfer the container 70 to the shelf 80 (refer to the lower half of FIG. 5). When the transfer destination T is the stacking space 2A, each of the transferrers H1 and H2 in the first orientation P1 moves a container 70 from the holder 41A or the holder 42A to the stacking space 2A to transfer the container 70 to the stacking space 2A (refer to the upper half of FIG. 5).

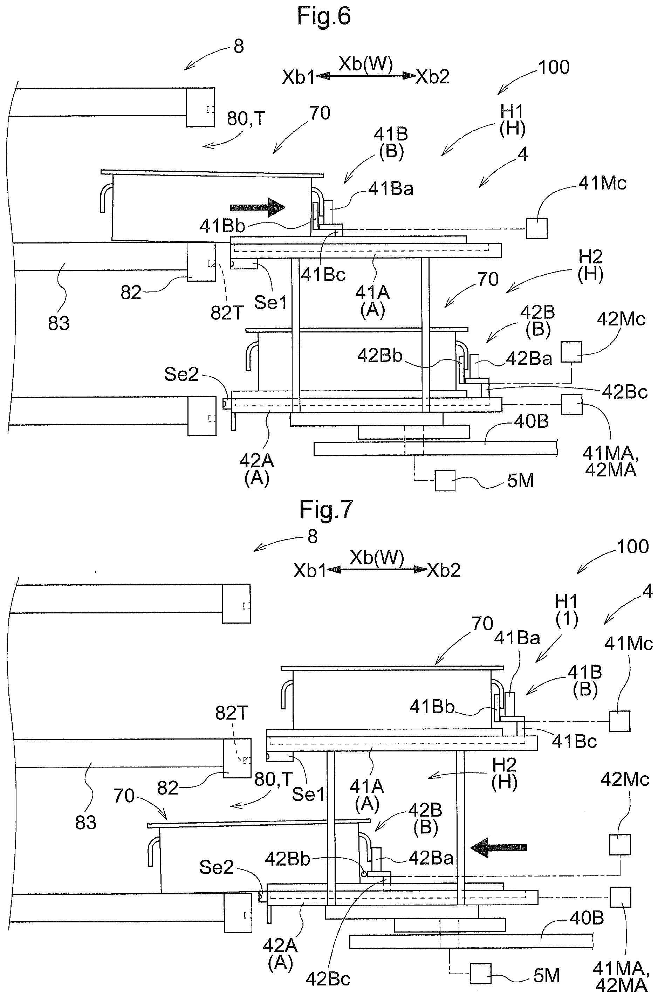

FIGs. 6 and 7 are diagrams describing operations (unloading and pickup operations) of the transfer device 4 to transfer a container 70 to and from a shelf 80 as the transfer destination T.

FIG. 6 shows a pickup operation (transfer operation) of the first transferrer H1 to pick up a container 70 from a shelf 80. The container 70 stored on the shelf 80 is picked up by the first transfer member 41B to the first holder 41A. In this case, the controller C (refer to FIG. 3) positions the first transferrer H1 at a reference position 80P (refer to FIG. 2) on the shelf 80, and then draws the container 70 with the first engagement member 41Bb toward the pickup side Xb2 in the second transfer direction. In the present embodiment, the reference position 80P on the shelf 80 is detected by a reference position sensor Se1 in the transfer device 4.

FIG. 7 shows an unloading operation (transfer operation) of the second transferrer H2 to unload a container 70 to a shelf 80. The container 70 held by the second holder 42A is unloaded to the shelf 80 by the second transfer member 42B. In this case, the second pressing member 42Ba presses the container 70 toward the unloading side Xb1 in the second transfer direction when the controller C (refer to FIG. 3) determines that no other container 70 is stored on the shelf 80 to which the container 70 is to be unloaded. In the present embodiment, containers 70 stored on the shelf 80 are detected by a container sensor Se2 in the transfer device 4.

In the present embodiment, as described above, a vertical space can be left between multiple containers 70 stacked in the stacking space 2A by the lifter 3. The transfer device 4 uses this space to transfer containers 70 to the stacking space 2A. In the present embodiment, the transfer device 4 performs operations to pick up and unload containers 70 to and from the stacking space 2A. Although not shown, in this example, the transfer device 4 performs operations to pick up and unload containers 70 to and from the stacking space 2A in parallel.

The transport vehicle 100 according to one or more embodiments of the disclosure performs acceleration limit control as appropriate to easily reduce vibrations and tilting caused by an operation to transfer an article when a container 70 is transferred by the transfer device 4. The details will be described below.

When the transfer lift 40B is in an upper area above a predetermined reference height h in the lift range of the transfer lift 40B, the controller C (refer to FIG. 3) performs the acceleration limit control to set the upper limit for acceleration of containers 70 moved in the second transfer direction Xb by the first transferrer H1 and the second transferrer H2 to be lower than when the transfer lift 40B is in a lower area below the reference height h. In the present embodiment, the entire lift range is divided into two areas, or the upper area above the reference height h and the lower area below the reference height h. In this example, the reference height h is included in the lower area. In other words, the lower area is an area at a height lower than or equal to the reference height h, although the division is not limited to this example.

The reference height h may be set based on the height of the center of gravity of the transport vehicle 100. In the present embodiment, the reference height h is the height of the center of gravity G of the transport vehicle 100. The center of gravity of the transport vehicle 100 is determined based on the mass of each component of the transport vehicle 100.

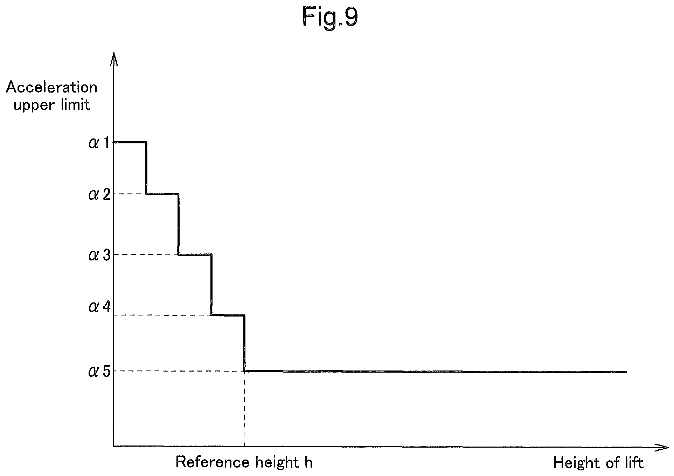

In the present embodiment, as shown in FIG. 8, when a container 70 is transferred between the transfer device 4 and a shelf 80 (in other words, when the transfer device 4 is in the second orientation P2 and a container 70 is moved by the transfer device 4 in the second transfer direction Xb) with the transfer lift 40B above the reference height h, the controller C performs the acceleration limit control to set the upper limit for acceleration. FIG. 9 is a graph showing the correspondence between the height of the lift (height of the transfer lift 40B) and the upper limit for acceleration. As shown in FIG. 9, in this example, the acceleration limit control sets the upper limit for acceleration to a value (α5 in FIG. 9) lower than any of the values (α1 to α4 in FIG. 9) for a structure not performing acceleration limit control. In other words, in this example, the upper limit for acceleration of containers 70 moved in the second transfer direction Xb by the first transferrer H1 and the second transferrer H2 is set to α5.

In the present embodiment, the upper limit of the speed of containers 70 moved in the second transfer direction Xb by the first transferrer H1 and the second transferrer H2 is the same independently of whether the acceleration limit control is performed, or in other words, whether the transfer lift 40B is above or below the reference height h. In other words, the controller C sets the upper limit of speed of a container 70 moved in the second transfer direction Xb by the first transferrer H1 and the second transferrer H2 to be the same in the area above the reference height h and the area below the reference height h.

When the transport vehicle 100 vibrates in response to advancement or retraction of the holders 41A and 42A in the second transfer direction Xb, the positional relationship with the shelf 80 may change, reducing the likelihood of appropriate transfer of containers 70. In contrast, the movement of the transfer members 41B and 42B in the second transfer direction Xb, or in other words, the movement of the engagement members 41Bb and 42Bb in the second transfer direction Xb, is less likely to affect the transfer operation, with the positional relationship between each of the transfer members 41B and 42B and the shelf 80 already fixed at the start of the movement.

Thus, in this example, the controller C performs the acceleration limit control when performing advancement-retraction control to cause the first holder 41A and the second holder 42A to advance and retract in the second transfer direction Xb with the transfer lift 40B above the reference height h. In contrast, the controller C does not perform the acceleration limit control when performing movement control to move the first transfer member 41B and the second transfer member 42B in each of the transfer directions Xa and Xb with the transfer lift 40B above the reference height h. In other words, for the advancement-retraction control, the upper limit for acceleration is set by the acceleration limit control with the transfer lift 40B above the reference height h. For the movement control, the upper limit for acceleration is not set, independently of whether the transfer lift 40B is above or below the reference height h. In other words, the controller C performs the acceleration limit control over movements of containers 70 resulting from advancement and retraction of the first holder 41A and the second holder 42A driven by the first holder driver 41MA and the second holder driver 42MA, but does not perform the acceleration limit control over movements of containers 70 resulting from movements of the first engagement member 41Bb and the second engagement member 42Bb driven by the first transfer driver 41Mc and the second transfer driver 42Mc.

When the transfer lift 40B is below the reference height h as shown in FIG. 8, the controller C does not perform the acceleration limit control. In this case, the maximum design value may substantially be the upper limit for acceleration, but the upper limit for acceleration may be set higher than the upper limit set in the acceleration limit control.

In this example, when the transfer lift 40B is below the reference height h, the upper limit for acceleration is set to be lower for the transfer lift 40B at higher positions. More specifically, as shown in FIG. 9, the upper limit for acceleration is set to be lower in a stepwise manner from α1 to α4 for the transfer lift 40B at higher positions. In other words, the controller C sets the upper limit for acceleration of containers 70 moved in the second transfer direction Xb by the first transferrer H1 and the second transferrer H2 to be lower gradually at higher positions from the lower end of the lower area below the reference height h in the lift range.

In the present embodiment, when a container 70 is transferred between the transfer device 4 and the stacking space 2A (in other words, when the container 70 is moved by the transfer device 4 in the first orientation P1 in the first transfer direction Xa), the acceleration limit control is not performed independently of whether the transfer lift 40B is above the reference height h. In this case, the maximum design value may substantially be the upper limit for acceleration.

The structure described above can reduce vibrations and tilting of the transport vehicle 100 caused by operations to transfer containers 70. The structure can also avoid lowered accuracy of transfer operations and reduce the frequency of suspension of transfer operations, thus increasing the efficiency of transfer operations.

### Other Embodiments

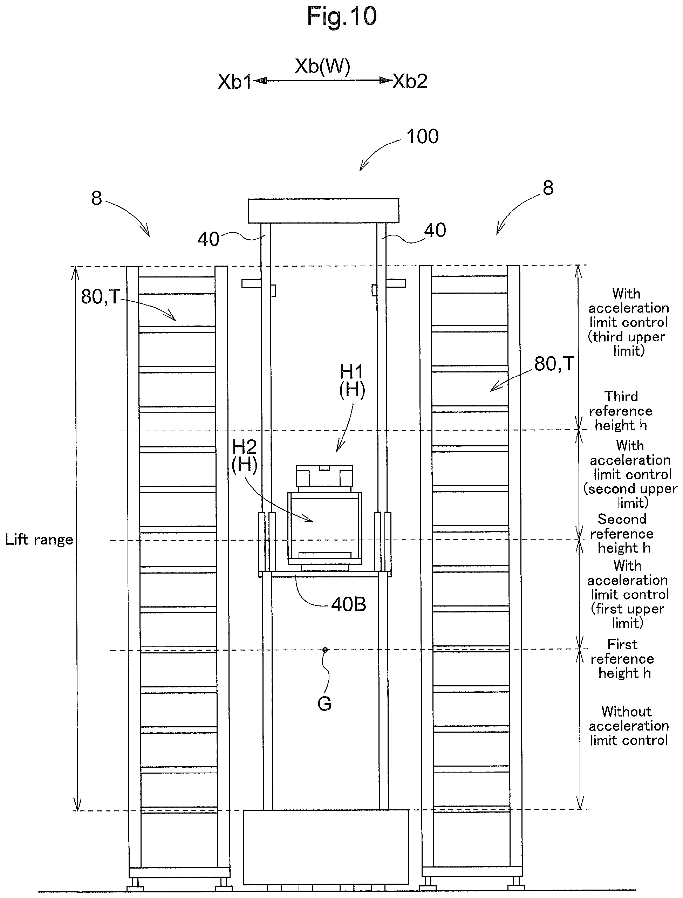

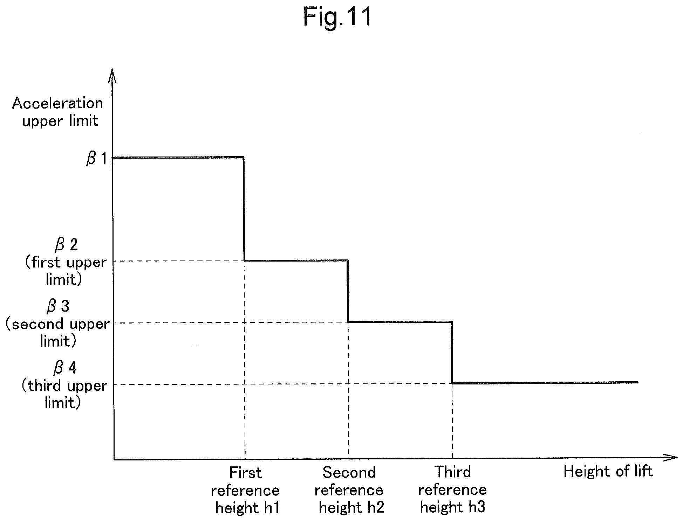

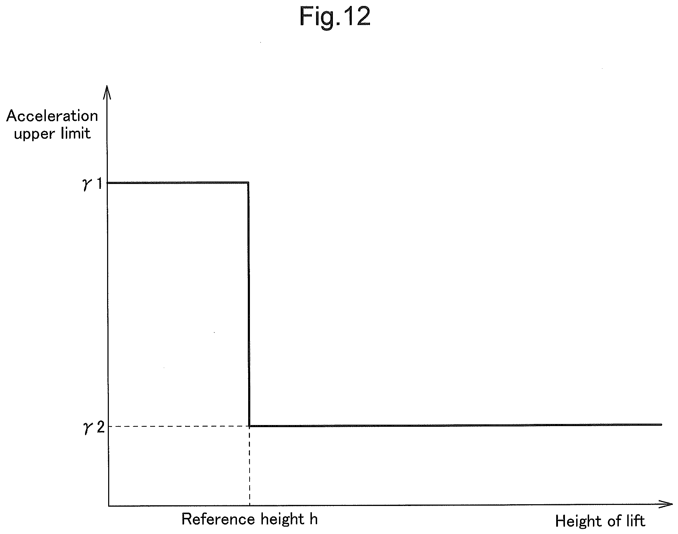

A transport vehicle according to other embodiments will now be described.
(1) In the above embodiment, a single reference height h is defined, and the entire lift range is divided into two areas, or the upper area above the reference height h and the lower area below the reference height h. However, the disclosure is not limited to this embodiment. Multiple reference heights h may be defined, and the entire lift range or part of the lift range may be divided into three or more areas using the multiple reference heights h defined. In this case, the upper limit for acceleration may be set to be lower in the order from the lower area to the upper area.
   For example, as shown in FIG. 10, a first reference height h1 may be defined at the height of the center of gravity G of the transport vehicle 100, and a second reference height h2 and a third reference height h3 may be defined above the first reference height h1 to divide the entire lift range into four areas. In this case, as shown in FIG. 11, the upper limit for acceleration in the acceleration limit control may be lower in a stepwise manner in the order from a first upper limit β2 in the area between the first reference height h1 and the second reference height h2, a second upper limit β3 in the area between the second reference height h2 and the third reference height h3, and a third upper limit β4 in the area above the third reference height h3. An upper limit β1 for acceleration in the area below the first reference height h1 may be set to the maximum design value.
(2) In the above embodiment, with the transfer lift 40B above the reference height h, the acceleration limit control is performed when the advancement-retraction control is performed, but is not performed when the movement control is performed. However, the disclosure is not limited to this embodiment. With the transfer lift 40B above the reference height h, the acceleration limit control may also be performed when the movement control is performed.
(3) In the above embodiment, the acceleration limit control is performed only over movements of containers 70 in the second transfer direction Xb for transfer of containers 70 between the transfer device 4 and the shelves 80. However, the disclosure is not limited to this embodiment. For example, the acceleration limit control may be performed over movements of containers 70 in the first transfer direction Xa for transfer of containers 70 between the transfer device 4 and the stacking space 2A. The acceleration limit control may also be performed for rotating operations when a container 70 is held in the holder A with its center of gravity off an extension of the rotary shaft 51 of the rotator 5.
(4) In the above embodiment, the upper limit for acceleration of containers 70 moved in the second transfer direction Xb by the transferrers H1 and H2 is set in a stepwise manner to be lower at higher positions from the lower end of the lower area below the reference height h in the lift range. However, the disclosure is not limited to this embodiment. For example, as shown in FIG. 12, the upper limit for acceleration may be set to a constant value γ1 in the lower area below the reference height h in the lift range, and may be set to γ2 in the acceleration limit control in the upper area above the reference height h. The upper limit for acceleration of a container 70 may also be set in a stepwise manner or linearly (in other words, continuously) to be lower at higher positions from the lower end of the entire lift range or part of the lift range.
(5) The structure described in each of the above embodiments may be combined with any other structures described in the other embodiments unless any contradiction arises. For other structures as well, the embodiments described herein are merely illustrative in all aspects. Thus, the embodiments described herein may be modified variously as appropriate without departing from the spirit and scope of the disclosure.

### Overview of Embodiments

Hereafter, the above transport vehicle will be described.

A transport vehicle transports articles by traveling along a front side of a storage rack including a plurality of shelves arranged vertically for storing the articles. The transport vehicle includes a traveler that travels along a travel path, a transfer device that transfers an article, and a controller that controls the transfer device. The transfer device includes a mast fixed to the traveler and extending vertically, a lift that ascends and descends along the mast, and a transferrer supported by the lift. The transferrer includes a holder that holds the article. The transferrer transfers the article between the holder and the shelves by moving the article in a transfer direction intersecting with, when viewed vertically, a vehicle front-rear direction in which the traveler travels. The controller performs, in response to the lift being in an area above a predetermined reference height within a lift range of the lift, acceleration limit control to set an upper limit for acceleration of the article moved in the transfer direction by the transferrer to be lower than a case of the lift being in an area below the reference height.

Large vibrations or tilting of the transport vehicle caused by a transfer operation may change the positions of the article, the shelf, and the transferrer relative to each other, lowering the accuracy of the transfer operation. To avoid such lowered accuracy, the transfer operation is suspended until the vibrations or the tilting attenuates.

However, the transport vehicle with the above structure is less likely to vibrate or tilt in response to operations to transfer articles. Thus, the structure can avoid such lowered accuracy of transfer operations and reduce the frequency of suspension of transfer operations, thus increasing the efficiency of transfer operations.

As described above, the transport vehicle with the structure is less likely to vibrate or tilt in response to operations to transfer articles.

The controller may set a same upper limit for a speed of the article moved in the transfer direction by the transferrer in the area above the reference height and the area below the reference height.

One factor affecting vibrations and tilting of the transport vehicle in response to article transfer operations is the acceleration of articles. The above structure reduces vibrations and tilting of the transport vehicle by limiting the acceleration. The structure sets the same upper limit for the movement speed of articles in the upper area above the reference height and the lower area below the reference height, thus achieving higher efficiency of transfer operations than when the upper limit of article movement speed is set to be lower in the upper area than in the lower area.

The transferrer may further include an engagement member engageable with the article, a mover assembly that moves the engagement member in the transfer direction, and an advancement-retraction assembly that causes the holder to advance and retract in the transfer direction. The controller may perform the acceleration limit control over movement of the article caused by advancement and retraction of the holder caused by the advancement-retraction assembly, and may not perform the acceleration limit control over movement of the article caused by movement of the engagement member caused by the mover assembly.

This structure performs the acceleration limit control only on the advancement and retraction operation that is highly likely to affect vibrations and tilting of the transport vehicle and does not perform the acceleration limit control over movements of the engagement members caused by the mover assembly that are less likely to affect vibrations and tilting of the transport vehicle. Thus, the structure can achieve higher efficiency of transfer operations than a structure that performs the acceleration limit control on both the advancement and retraction operation and the movements of the engagement members. Thus, the structure can increase the efficiency of transfer operations while effectively reducing vibrations and tilting of the transport vehicle.

The reference height may be set based on a height of a center of gravity of the transport vehicle.

Examination performed by the inventors shows that movements of articles in the transfer direction affect vibrations and tilting of the transport vehicle by a greater degree in the area above the center of gravity of the transport vehicle than in the area below the center of gravity of the transport vehicle. The above structure sets the upper limit for acceleration of articles moved in the transfer direction in the area above the center of gravity of the transport vehicle to be lower than the upper limit for acceleration of articles moved in the transfer direction in the area below the center of gravity of the transport vehicle. This reduces vibrations and tilting of the transport vehicle caused by operations to transfer articles while avoiding decrease in efficiency of transfer operations.

The traveler may have a dimension in a vehicle width direction less than or equal to half a dimension of the traveler in the vehicle front-rear direction. The vehicle width direction may be perpendicular to the vehicle front-rear direction when viewed vertically. A vertical dimension from a lower end of the traveler to an upper end of the mast may be greater than or equal to twice the dimension of the traveler in the vehicle width direction.

In this structure, the traveler is elongated in the vehicle front-rear direction and tall. Thus, movement of articles in the transfer direction intersecting with the vehicle front-rear direction may easily cause large vibrations of the transport vehicle. Thus, the acceleration limit control is performed to effectively reduce vibrations and tilting of the transport vehicle.

The controller may set the upper limit for acceleration of the article moved in the transfer direction to be lower at higher positions from a lower end of at least part of the lift range.

In this structure, the upper limit for acceleration is set to be lower gradually at higher positions in at least part of the lift range. This reduces vibrations and tilting of the transport vehicle caused by operations to transfer articles while avoiding decrease in efficiency of transfer operations.

### INDUSTRIAL APPLICABILITY

The technique according to one or more embodiments of the disclosure is applicable to a transport vehicle that transports articles by traveling along the front side of a storage rack including multiple shelves arranged vertically for storing articles.

### REFERENCE SIGNS LIST

100 transport vehicle
1 traveler
4 transfer device
8 container rack (storage rack)
40 transfer mast (mast)
40B transfer lift (lift)
41A first holder (holder)
41Bb first engagement member (engagement member)
41MA first holder driver (advancement-retraction assembly)
41Mc first transfer driver (mover assembly)
42A second holder (holder)
42Bb second engagement member (engagement member)
42Mc second transfer driver (mover assembly)
42MA second holder driver (advancement-retraction assembly)
70 container (article)
80 shelf
A holder
C controller
G center of gravity
H transferrer
H1 first transferrer (transferrer)
H2 second transferrer (transferrer)
R travel path
L vehicle front-rear direction
W vehicle width direction
Xb second transfer direction (transfer direction)
Sl length
Sw width
Sh height
h reference height

## Claims

1. A transport vehicle for transporting articles by traveling along a front side of a storage rack including a plurality of shelves arranged vertically for storing the articles, the transport vehicle comprising:
a traveler configured to travel along a travel path;
a transfer device configured to transfer an article; and
a controller configured to control the transfer device,
the transfer device including
a mast fixed to the traveler and extending vertically,
a lift configured to ascend and descend along the mast, and
a transferrer supported by the lift,
the transferrer including a holder configured to hold the article, the transferrer being configured to transfer the article between the holder and the shelves by moving the article in a transfer direction intersecting with, when viewed vertically, a vehicle front-rear direction in which the traveler travels,
the controller being configured to perform, in response to the lift being in an area above a predetermined reference height within a lift range of the lift, acceleration limit control to set an upper limit for acceleration of the article moved in the transfer direction by the transferrer to be lower than a case of the lift being in an area below the reference height.

2. The transport vehicle according to claim 1, wherein
the controller sets a same upper limit for a speed of the article moved in the transfer direction by the transferrer in the area above the reference height and the area below the reference height.

3. The transport vehicle according to claim 1 or 2, wherein
the transferrer further includes an engagement member engageable with the article, a mover assembly configured to move the engagement member in the transfer direction, and an advancement-retraction assembly configured to cause the holder to advance and retract in the transfer direction, and
the controller performs the acceleration limit control over movement of the article caused by advancement and retraction of the holder caused by the advancement-retraction assembly, and does not perform the acceleration limit control over movement of the article caused by movement of the engagement member caused by the mover assembly.

4. The transport vehicle according to claim 1 or 2, wherein
the reference height is set based on a height of a center of gravity of the transport vehicle.

5. The transport vehicle according to claim 1 or 2, wherein
the traveler has a dimension in a vehicle width direction less than or equal to half a dimension of the traveler in the vehicle front-rear direction, and the vehicle width direction is perpendicular to the vehicle front-rear direction when viewed vertically, and
a vertical dimension from a lower end of the traveler to an upper end of the mast is greater than or equal to twice the dimension of the traveler in the vehicle width direction.

6. The transport vehicle according to claim 1 or 2, wherein
the controller sets the upper limit for acceleration of the article moved in the transfer direction to be lower at higher positions from a lower end of at least part of the lift range.
